Europäisches Patentamt

European Patent Office

Office européen des brevets

(19)

(11) Veröffentlichungsnummer: **0 214 956**
**B1**

(12) **EUROPÄISCHE PATENTSCHRIFT**

(45) Veröffentlichungstag der Patentschrift: **14.11.90**

(51) Int. Cl.⁵: **A 01 B 33/02,** A 01 B 33/14

(21) Anmeldenummer: **86890255.2**

(22) Anmeldetag: **10.09.86**

(54) Landwirtschaftliches Bodenbearbeitungsgerät.

(30) Priorität: **10.09.85 AT 2642/85**

(43) Veröffentlichungstag der Anmeldung:
**18.03.87 Patentblatt 87/12**

(45) Bekanntmachung des Hinweises auf die
Patenterteilung:
**14.11.90 Patentblatt 90/46**

(84) Benannte Vertragsstaaten:
**AT CH DE FR GB IT LI SE**

(56) Entgegenhaltungen:
**WO-A-84/00465**
**AT-B- 361 731**
**DE-A-3 229 232**
**DE-B-1 093 127**
**FR-A-2 379 241**
**US-A-2 957 529**
**US-A-3 833 067**
**US-E- 22 924**

(73) Patentinhaber: **Herz AKM Armaturen-, Kessel-
und Metallwaren- Erzeugungsgesellschaft mbH
Nr. 138
A-8272 Sebersdorf (AT)**

(72) Erfinder: **Fleck, Willibald
Sebersdorf 28
A-8272 (AT)**

(74) Vertreter: **Brauneiss, Leo, Patentanwälte Dipl.-
Ing.
Strohgasse 10
A-1030 Wien (AT)**

EP 0 214 956 B1

Courier Press, Leamington Spa, England.

## Beschreibung

Die Erfindung bezieht sich auf ein landwirtschaftliches Bodenbearbeitungsgerät, mit einer an einen Motorantrieb, insbesondere die Zapfwelle eines Traktors, anschließbaren, quer zur Fahrtrichtung liegenden Welle, auf der mehrere bei ihrer Drehung in den Boden eingreifende starre Scheiben zur Wellenachse geneigt starr befestigt sind, wobei jede dieser ovalen Scheiben einen glatten Umfang hat und wobei benachbarte Scheiben hinsichtlich der Richtung der stärksten Radiusneigung gegeneinander versetzt sind, so daß der Umfang jeder Scheibe eine Taumelbewegung mit in Wellenachsrichtung liegender Bewegungskomponente vollführt.

Ein Bodenbearbeitungsgerät der eingangs geschilderten Art ist aus der AT-PS 361 731 bekannt. Bei dieser bekannten Konstruktion sind bombiert ausgebildete Scheiben an der Welle starr befestigt und laufen mit einer Umfangsgeschwindigkeit von höchstens 2 m pro Sekunde um. Untersuchungen haben nun gezeigt, daß es zur Schonung des Bodens nicht so sehr auf die Umfangsgeschwindigkeit der Scheiben ankommt, sondern daß vielmehr andere Kenngrößen maßgebend sind. Weiters hat es sich gezeigt, daß eine Beeinflussung des auf den Boden ausgeübten Zerkleinerungseffektes wünschenswert ist, was bei der eingangs erwähnten bekannten Konstruktion nicht möglich ist. Die Erfindung bezweckt nun, ein landwirtschaftliches Bodenbearbeitungsgerät der eingangs beschriebenen Art so zu verbessern, daß bei gegenüber der bekannten Konstruktion wesentlich erhöhter Wirksamkeit der Bodenbearbeitung dennoch der Boden geschont wird, insbesondere die für das Mikroklima des Bodens wichtige Krümelstruktur erhalten bleibt. Die Erfindung löst diese Aufgabe dadurch, daß jede Scheibe zwischen zwei auf die Welle in verschiedenen Winkelstellungen drehfest aufsetzbaren, an der Scheibe anliegenden Klemmhülsen liegt, wobei die an der Scheibe anliegende Klemmfläche jeder Klemmhülse schräg zur Wellenachse liegt, einander benachbarte Klemmhülsen benachbarter Scheiben jedoch aneinander entlang einer normal zur Wellenachse liegenden Stirnfläche anliegen, und daß der größte Geschwindigkeitswert der in Wellenachsrichtung liegenden Bewegungskomponente eines Umfangspunktes der Scheibe während seines Umlaufes um die Wellenachse 1,0 bis 2,5 Meter pro Sekunde, vorzugsweise 1,2 bis 2,2 Meter pro Sekunde, insbesondere 1,5 bis 2,0 Meter pro Sekunde, beträgt. Die erwähnten Untersuchungen haben nämlich gezeigt, daß es nicht die Umfangsgeschwindigkeit jeder Scheibe ist, welche den maßgebenden Faktor darstellt, sondern der Maximalwert der in Wellenachsrichtung liegenden Geschwindigkeitskomponente, also die Auftreffgeschwindigkeit, mit welcher jede Scheibe auf das Erdreich, insbesondere im Sinne einer seitlichen Wegschleuderung desselben, wirksam wird. Infolge der Taumelbewegung der Scheibe verläuft der zeitliche Geschwindigkeitsverlauf jedes Umfangspunktes jeder Scheibe etwa nach einer Sinuskurve und es hat sich gezeigt, daß der Amplitudenwert dieser Sinusbewegung der kritische Wert ist, welcher maßgebend ist, ob eine einerseits wirksame, andererseits jedoch schonende Bodenbearbeitung erfolgt oder nicht. Liegt dieser Maximalwert der in Wellenachsrichtung liegenden Geschwindigkeitskomponente unter 1,0 Meter pro Sekunde, so erfolgt keine hinreichende Bodenbearbeitung mehr, denn der Boden wird zerschnitten, aber mangelhaft zerkleinert. Die Einarbeitung auf den Boden aufgebrachten Materiales wird nicht mehr verläßlich möglich, da die zum Einarbeiten nötige Mischenergie auf den Boden nicht mehr ausgeübt wird. Liegt der größte Geschwindigkeitswert der erwähnten Bewegungskomponente hingegen über 2,5 Meter pro Sekunde, so werden die Bodenkrümel zerstört, was eine Leblosmachung des Bodens zur Folge hat, da die Zwischenräume zwischen den Krümeln nicht mehr hinreichend aufrecht erhalten werden können. Der Boden wird unfruchtbar bzw. benötigt mehr Dünger als ein richtig bearbeiteter Boden.

Wie bereits erwähnt, wird das Erdreich von jeder Scheibe seitlich weggeschleudert. Wenn benachbarte Scheiben nicht zu weit voneinander entfernt sind, was aus Gründen einer kontinuierlichen Bodenbearbeitung nicht sein soll so wird zumindest ein Teil des Erdreiches von jeder Scheibe, auf die benachbarte Scheibe geschleudert, wodurch die Erdklumpen zerschlagen werden. Dieser Effekt ist abhängig von der Masse der Erdbrocken, da größere Brocken eine größere Wucht haben und daher mehr zertrümmert werden als kleinere Klümpchen. Untersuchungen haben gezeigt, daß dieser Effekt jedoch auch abhängt vom Winkel, mit welchem der Erdbrocken auf die benachbarte Scheibe auftrifft. Wenn die Klemmhülsen so verstellt werden, daß die Richtung der stärksten Radiusneigung der jeweiligen Scheibe geändert wird, so ergibt sich eine Änderung des Auftreffwinkels, mit welchem die Erdbrocken, welche von der benachbarten Scheibe weggeschleudert werden, auf die vorliegende Scheibe auftreffen. Eine Änderung der Richtung der stärksten Radiusneigung einer Scheibe bleibt durch die zur Welle normal liegenden Stirnflächen der Klemmhülsen auf die anderen Scheiben ohne Einfluß.

Vorzugsweise hat im Rahmen der Erfindung die Welle Polygonalquerschnitt mit der Eckenzahl n, insbesondere Sechskantquerschnitt, wobei die Klemmhülsen dazu passende mittige Öffnungen, ebenfalls mit Polygonalquerschnitt, aufweisen. Auf diese Weise ergibt sich stets eine drehschlüssige Verbindung zwischen der Welle und den beiden Klemmhülsen, welche zwischen sich die Scheibe einschließen. Diese Anordnung ist einfacher und betriebssicherer als etwa eine Festlegung der Klemmhülsen an einer Rundwelle mittels Klemmschrauben od.dgl. Zweckmäßig hat erfindungsgemäß der Polygonalquerschnitt der Öffnungen der Klemmhülse die Eckenzahl 2n. Im Falle eines Sechskantquerschnittes der Welle ist also der Polygonalquerschnitt der Klemmhülsenöffnungen ein Zwölfeck, was es ermöglicht, die Klemmhülsen relativ zur Sechskantwelle in Schritten von je 30° zu verstellen. Dies hat sich in der Praxis bewährt.

Es wäre möglich, die Scheiben zur Drehbewegung bloß durch die Klemmwirkung der Klemmhülsen mitzunehmen, oder die Scheibe an den Klemmhülsen anzuschrauben od.dgl. Im Rahmen der Erfindung ist es jedoch günstiger, wenn jede Scheibe auf den Polygonalquerschnitt der Welle mit Spiel passende mittige Öffnungen mit der gleichen Polygonalform hat, da sich auf diese Weise eine einmal auf die Welle aufgeschobene Scheibe relativ zur Welle nicht mehr drehen kann. Das geringe Spiel ist erforderlich, um die erwähnte Veränderung der Richtung der stärksten Radiusneigung der jeweiligen Scheibe in Bezug auf die Welle zuzulassen.

Wellen mit Polygonalquerschnitt bzw. Bodenbearbeitungswerkzeuge mit Naben mit Polygonalquerschnitt sind bei Landwirtschaftsmaschinen an sich bekannt (US-PS 3 833 067, US-PS 4 047 576). Weiters ist es aus der US-RE 22924 und aus der US-A 3 833 067 bekannt, auf eine Welle mit Viereckquerschnitt Scheiben normal zur Wellenachse aufzusetzen, welche Scheiben eine mittige Öffnung mit Polygonquerschnitt haben, wobei benachbarte Scheiben durch Distanzhülsen voneinander in Abstand gehalten sind, deren mittige Öffnungen ebenfalls Polygonquerschnitt aufweisen können. Da zwischen zwei Scheiben jedoch jeweils nur eine einzige Distanzhülse liegt, ist mit solchen Konstruktionen eine Verstellung der Scheibenneigung und somit eine Erzielung der durch die vorliegende Erfindung erreichten Effekte nicht möglich.

Im Rahmen der Erfindung können die auf die Welle eben oder tellerartig nach einer Seite zu aufgebogen bzw. bombiert sein, wobei die hohlen Seiten aller Scheiben nach der gleichen Seite sehen. Ebene Scheiben sind leichter herzustellen, aufgebogene bzw. bombierte Scheiben haben eine größere Steifheit. Im Falle von bombierten bzw. aufgebogenen Scheiben ist es jedoch zweckmäßig, nicht die ganze Scheibe zu krümmen, da dies bedeuten würde, daß auch die an der Scheibe anliegenden Flächenteile der Klemmhülsen entsprechend bombiert sein müssen, um einen satten Sitz der Scheibe zu sichern. Günstiger ist es daher im Falle gekrümmter Scheiben im Rahmen der Erfindung, wenn die aneinander anliegenden Flächenteile der Scheiben und der Klemmhülsen eben sind und lediglich die Randpartien jeder Scheibe aus der Scheibenebene herausgebogen sind, z.B. in Form der Mantelfläche eines Kegelstumpfes, in Form einer sphärischen Fläche od.dgl.

Die axiale Lage jedes Klemmhülsenpaares und damit jeder Scheibe auf der Welle könnte durch Stellringe od.dgl. gesichert werden. Einfacher ist es jedoch gemäß einer Weiterbildung der Erfindung, wenn der ganze Satz von Klemmhülsen und Scheiben auf der Welle durch zwei Endstücke, vorzugsweise die Lager der Welle, gegen Verschiebung in Wellenlängsrichtung gehalten ist. Dadurch wird auch die Abziehung der Klemmhülsen von der Welle zwecks Änderung der Stellung einer oder mehrerer Scheiben erleichtert.

Die erwähnte Änderung der Lage einzelner Scheiben auf der Welle bietet auch die Möglichkeit, die Konstruktion an verschiedene Bodenbeschaffenheiten anzupassen. Zweckmäßig ist die Anordnung so getroffen, daß jede Scheibe für sich relativ zur Welle gleich geneigt ist, jedoch nach einer anderen Richtung, wobei sich die Richtung der größten Radiusneigung relativ zur Wellenachse gleichmäßig und gleichsinnig von Scheibe zu Scheibe ändert. Im Hinblick auf einen ruhigen Lauf des Gerätes ist es hiebei günstig, wenn eine solche Anordnung mehr als einen einzigen Schraubengang auf der Welle aufweist. Im allgemeinen ist jedoch der geringste Spalt zwischen zwei einander benachbarten Scheiben umso geringer, je mehr die Richtungen der stärksten Radiusneigung benachbarter Scheiben gegeneinander versetzt sind. Bei stark steinigen Böden ist es daher günstiger, diese Versetzung geringer zu wählen als bei praktisch steinlosen Böden, so daß bei steinigen Böden die Richtungen der stärksten Radiusneigung auch weniger als einen Schraubengang auf der Welle beschreiben können.

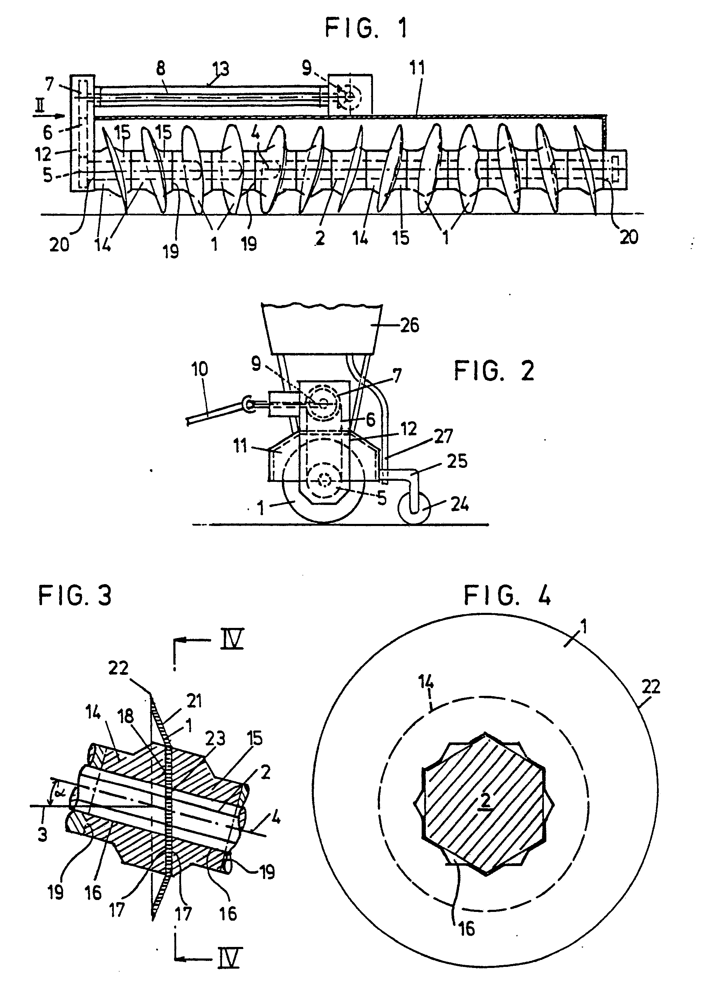

In der Zeichnung ist die Erfindung an Hand eines Ausführungsbeispieles schematisch dargestellt. Fig. 1 zeigt eine Ansicht des Gerätes von hinten, wobei nicht erfindungswesentliche Bauteile weggelassen sind. Fig. 2 ist eine Ansicht in Richtung des Pfeiles II der Fig. 1. Fig. 3 zeigt in größerem Maßstab eine zwischen zwei Klemmhülsen liegende Scheibe im Schnitt. Fig. 4 zeigt, in nochmals vergrößertem Maßstab, einen Schnitt nach der Linie IV—IV der Fig. 3.

Das Gerät ist als Anhängegerät zu einem Traktor ausgebildet, an dessen Hubwerk das Gerät in an sich bekannter Weise mittels Lenkern derart befestigbar ist, daß die Scheiben 1 des Gerätes so abgesenkt werden können, daß sie in den zu bearbeitenden Boden eingreifen bzw. so angehoben werden können, daß sie außer Eingriff mit dem Boden sind. Alle Scheiben 1 sind auf eine gemeinsame Welle 2 mittig aufgesetzt und an dieser Welle drehfest befestigt, wobei jede Scheibe schräg zur Welle 2 angeordnet ist. Der Neigungswinkel α, den die Symmetrieachse 3 (Fig. 3) jeder Scheibe 1 mit der Achse 4 der Welle 2 einschließt, ist für jede Scheibe 1 gleich, jedoch ist jede Scheibe nach einer anderen Richtung geneigt, wobei die Anordnung so getroffen ist, daß sich diese Neigungsrichtungen gleichmäßig und gleichsinnig von Scheibe zu Scheibe ändern. Bei der dargestellten Anordnung ist die äußerste rechte Scheibe 1 (Fig. I) gegenüber der äußersten linken Scheibe im selben Sinn und um das gleiche Maß versetzt geneigt angeordnet, wie die diesen beiden Scheiben benachbarten Scheiben, so daß sich also, über die Länge der Welle 2 gesehen, ein kompletter Umlauf der Richtungen der stärksten Radiusneigung der einzelnen Scheiben 1 um 360° ergibt.

Der Drehantrieb der Welle 2 erfolgt motorisch mittels eines auf das eine Wellenende aufgekeilten Zahnrades 5 und einer Kette 6 von einem Zahnrad 7 aus, das von einer Welle 8 angetrieben wird, die ihrerseits über ein Winkelgetriebe 9 von einer an die nicht dargestellte Zapfwelle eines Traktors od.dgl. angeschlossenen Gelenkwelle 10 (Fig. 2) angetrieben wird. Die oberen Hälften der Scheiben 1 sind durch einen Schutzmantel 11 abgedeckt, der an seiner einen Seite ein Gehäuse 12 für die Zahnräder 5, 7 und die Kette 6 trägt. Die Welle 8 liegt innerhalb eines Schutzrohres 13, welches zum Gehäuse für das Winkelgetriebe 9 führt.

Jede Scheibe hat einen ovalen bzw. elliptischen Umfang, wobei die längere Achse des Ovals bzw. der Ellipse mit jenem Radiusvektor der Scheibe 1 zusammenfällt, der mit der Achse der Welle 2 den kleinsten Winkel (gleich mit dem Winkel $\alpha$, Fig. 3) einschließt. Dadurch wird eine stets gleichbleibende Eingriffstiefe der Scheiben 1 in Bezug auf den zu bearbeitenden Boden trotz der Schrägstellung der Scheiben 1 erzielt. Die Scheiben 1 sind auf der Welle 2 mittels Klemmhülsen 14, 15, welche zugleich als Distanzstücke wirken, in einem derartigen Abstand voneinander angeordnet, daß sich, trotz der unterschiedlichen Neigungen benachbarter Scheiben 1 relativ zur Welle 2, stets ein hinreichender Abstand zwischen je zwei benachbarten Scheiben 1 ergibt. Dadurch wird vermieden, daß Steine oder andere Festkörper zwischen den Scheiben 1 eingeklemmt werden können. Zur Veränderung dieses Abstandes und zur Veränderung des Auftreffwinkels, mit welchem das von jeder Scheibe 1 aufgeworfene Erdreich auf die benachbarte Scheibe trifft, sind die Klemmhülsen 14, 15 in ihrer Winkellage relativ zur Welle 2 veränderbar, wodurch sich die Richtung der stärksten Radiusneigung jeder Scheibe 1 relativ zur Achse 4 der Welle 2 verändern läßt. Hiezu hat die Welle 2 Sechskantquerschnitt (Fig. 4) und jede Klemmhülse 14, 15 hat eine mittige Öffnung 16, deren Querschnitt die Form eines regelmäßigen Zwölfeckes hat, das gebildet wird aus zwei regelmäßigen Sechsecken mit gleichem Mittelpunkt, die relativ zueinander um 30° verdreht sind. Die Seitenlänge jedes dieser Sechsecke ist geringfügig größer als die Seitenlänge des Sechseckes des Querschnittes der Welle 2, so daß die beiden Klemmhülsen 14, 15 satt passend auf die Welle 2 aufgeschoben werden können, sich jedoch relativ zu dieser nicht drehen können. Die wirksamen Klemmflächenteile 17 der Klemmhülsen 14, 15, das sind ihre der Scheibe 1 zugewendeten Stirnflächen, verlaufen eben, jedoch im Winkel $\alpha$ geneigt schräg zur Achse der Öffnungen 16 (Fig. 3). Ebenso ist der zwischen den Klemmhülsen 14, 15 liegende Flächenteil 18 jeder Scheibe 1 eben, so daß jede Scheibe 1 sicher zwischen den beiden Klemmhülsen 14, 15 sitzt und ihre Neigung $\alpha$ relativ zur Welle 2 nicht ändern kann. Die jeweils andere Stirnfläche 19 jeder Klemmhülse 14, 15 verläuft normal zur Achse 4 der Welle 2 und der ganze Satz der Klemmhülsen 14, 15 und der von ihnen gehaltenen Scheiben 1 ist eng aneinander anliegend auf die Welle 2 aufgeschoben und wird an den beiden Wellenenden durch Endstücke 20, z.B. die Lager der Welle 2 im Schutzmantel 11, gehalten. Der außerhalb der Klemmhülsen 14, 15 liegende Umfangsabschnitt 21 jeder Scheibe 1 (Fig. 3) ist bombiert oder entlang einer Kegelfläche ausgebildet, wodurch sich die erwähnte seitliche Wurfwirkung auf das von der Scheibe 1 erfaßte Erdreich ergibt. Der Umfang 22 jeder Scheibe 1 ist glatt und vorzugsweise verhältnismäßig scharf ausgebildet, um eine gute Schneidwirkung auf den Boden zu ergeben.

Wie ersichtlich, ergibt sich durch diese Anordnung die Möglichkeit, die zu jeder Scheibe 1 zugehörigen beiden Klemmhülsen 14, 15 stufenweise um jeweils 30° gegenüber der Welle 1 zu versetzen, wodurch die Richtung der maximalen Radiusneigung jeder Scheibe 1 relativ zur Welle 2 veränderbar ist. Dies ist gleichbedeutend mit einer Änderung des Winkels, mit welchem die von jeder Scheibe 1 aufgeworfenen Erdklumpen auf die benachbarte Scheibe treffen, was von Einfluß ist auf die Zertrümmerung der Erdbrokken.

Zur Schonung des Bodens im Sinne einer Erhaltung der Krümelstruktur und damit einer Schonung des Mikroklimas des Bodens beträgt der größte Geschwindigkeitswert, welchen jeder Punkt am Umfang 22 der Scheibe aufweist, gemessen in Richtung der Achse 4 der Welle 2, nicht weniger als 1,0, jedoch nicht mehr als 2,5 Meter pro Sekunde. Vorzugsweise liegt dieser Geschwindigkeitswert im Intervall zwischen 1,2 und 2,2 Meter pro Sekunde, insbesondere zwischen 1,5 und 2,0 Meter pro Sekunde. Bei einer praktischen Ausführungsform betrug dieser Wert 1,85 Meter pro Sekunde. Der Winkel $\alpha$ betrug etwa 20°, der größte Scheibendurchmesser etwa 54 cm. Dies ergab eine Umfangsgeschwindigkeit der Scheiben 1 von etwa 7 Meter pro Sekunde bzw. bei einer Drehzahl der Welle 2 von 270 Umdrehungen pro Minute.

Zur Änderung der erwähnten Lage der Scheiben 1 relativ zur Welle 2 ist es, wie sich aus Vorstehendem ergibt, nötig, die Welle 2 auszubauen und die Scheiben 1 bzw. die Klemmhülsen 14, 15 von der Welle 2 abzuziehen und in der gewünschten Stellung wieder aufzusetzen. Damit dies von Unbefugten nicht geschehenkann, ist es möglich, die Welle 2 an ihren Enden zu plombieren.

Um eine sichere Mitnahme der Scheiben 1 durch die Welle 2 auf Drehung zu erzielen, ist jede Scheibe mit einer mittigen sechskantigen Öffnung 23 auf die Welle 2 aufgesetzt, jedoch mit geringem Spiel, um die Schrägstellung der Scheibe 1 in Bezug auf die Welle auch in unterschiedlichen Winkellagen der Scheibe 1 zuzulassen.

Am Schutzmantel 11 kann eine dem Gerät nachlaufende höhenverstellbare Auflagewalze 24 mittels Auslegern 25 (Fig. 2) befestigt sein, die höhenverstellbar ist, so daß die Eingriffstiefe der Scheiben 1 in den Boden festgelegt wird. Eine weitere Höhenverstellung ist auch mittels der Oberlenker von der Dreipunkthydraulik des Traktors aus möglich.

Weiters kann am Schutzmantel 11 oben ein Behälter 26 für Saatgut od. dgl. montiert sein, von welchem Saatgutleitungen 27 od. dgl. nach unten in den Spalt zwischen den Scheiben 1 und der Walze 24 führen. Zweckmäßig sind die Austrittsöffnungen dieser Saatgutleitungen 27 in Fahrtrichtung des Gerätes verstellbar, um die Saattiefe ändern zu können.

Weitere Vorteile des erfindungsgemäßen Gerätes liegen darin, daß der bearbeitete Boden bis zur eingestellten Tiefe locker bleibt. Das Saatgut kommt in die feuchte Erde, was gute Auflaufbedingungen ergibt. Organisches Material wird sicher, aber nicht zu tief in den Boden eingebracht. Der Energiebedarf ist gering und es ist zur Bearbeitung einer bestimmten Bodenfläche nur eine geringe Zeit bei wenigen Fahrspuren erforderlich. Gezielte Sä- und Düngemaßnahmen sind in einem Arbeitsgang möglich. Zusatzgeräte können problemlos montiert werden und z.B. mit einem Bodenantrieb versehen sein.

Wie bereits erwähnt, kann jede Scheibe 1 für sich zwecks leichterer Herstellung auch eben sein.

**Patentansprüche**

1. Landwirtschaftliches Bodenbearbeitungsgerät, mit einer an einen Motorantrieb, insbesondere die Zapfwelle eines Traktors, anschließbaren, quer zur Fahrtrichtung liegenden Welle (2), auf der mehrere bei ihrer Drehung in den Boden eingreifende starre Scheiben (1) zur Wellenachse geneigt starr befestigt sind, wobei jede dieser ovalen Scheiben (1) einen glatten Umfang hat und wobei benachbarte Scheiben (1) hinsichtlich der Richtung der stärksten Radiusneigung gegeneinander versetzt sind, so daß der Umfang (22) jeder Scheibe (1) eine Taumelbewegung mit in Wellenachsrichtung liegender Bewegungskomponente vollführt, dadurch gekennzeichnet, daß jede Scheibe (1) zwischen zwei auf die Welle (2) in verschiedenen Winkelstellungen drehfest aufsetzbaren, an der Scheibe (1) anliegenden Klemmhülsen (14, 15) liegt, wobei die an der Scheibe (1) anliegende Klemmfläche (17) jeder Klemmhülse (14, 15) schräg zur Wellenachse (4) liegt, einander benachbarte Klemmhülsen (14, 15) benachbarter Scheiben (1) jedoch aneinander entlang einer normal zur Wellenachse (4) liegenden Stirnfläche (19) anliegen, und daß der größte Geschwindigkeitswert der in Wellenachsrichtung liegenden Bewegungskomponente eines auf der Scheibe (1) liegenden Umfangspunktes während seines Umlaufes um die Wellenachse 1,0 bis 2,5 Meter pro Sekunde, vorzugsweise 1,2 bis 2,2 Meter pro Sekunde, insbesondere 1,5 bis 2,0 Meter pro Sekunde, beträgt.

2. Bodenbearbeitungsgerät nach Anspruch 1, dadurch gekennzeichnet, daß die Welle (2) Polygonalquerschnitt mit der Eckenzahl n, insbesondere Sechskantquerschnitt, hat, und daß die Klemmhülsen (14, 15) dazu angepaßte mittige Öffnungen (16), ebenfalls mit Polygonalquerschnitt, aufweisen.

3. Bodenbearbeitungsgerät nach Anspruch 2, dadurch gekennzeichnet, daß der Polygonalquerschnitt der mittigen Öffnungen (16) der Klemmhülsen (14, 15) die Eckenzahl 2n hat.

4. Bodenbearbeitungsgerät nach Anspruch 2 oder 3, dadurch gekennzeichnet, daß jede Scheibe (1) eine auf den Polygonalquerschnitt der Welle (2) mit Spiel passende, mittige Öffnungen (23) mit der gleichen Polygonalform hat.

5. Bodenbearbeitungsgerät nach einem der Ansprüche 1 bis 4, dadurch gekennzeichnet, daß die Scheiben (1) tellerartig nach einer Seite zu aufgebogen bzw. bombiert sind, wobei die hohlen Seiten aller Scheiben (1) nach der gleichen Seite sehen.

6. Bodenbearbeitungsgerät nach einem der Ansprüche 1 bis 5, dadurch gekennzeichnet, daß die aneinander anliegenden Flächenteile (17, 18) der Scheiben (1) und der Klemmhülsen (14, 15) eben sind, wogegen die Umfangsabschnitte (21) der Scheiben (1) bombiert oder kegelstumpfförmig ausgebildet sind.

7. Bodenbearbeitungsgerät nach einem der Ansprüche 1 bis 6, dadurch gekennzeichnet, daß der ganze Satz von Klemmhülsen (14, 15) und Scheiben (1) auf der Welle (2) durch zwei Endstücke (20), vorzugsweise die Lager der Welle (2), gegen Verschiebung in Wellenlängsrichtung gehalten ist.

8. Bodenbearbeitungsgerät nach einem der Ansprüche 1 bis 7, dadurch gekennzeichnet, daß jede Scheibe (1) für sich relativ zur Welle (2) gleich geneigt ist, jedoch nach einer anderen Richtung, wobei sich die Richtung der größten Radiusneigung relativ zur Wellenachse gleichmäßig und gleichsinnig von Scheibe (1) zu Scheibe (1) ändert.

9. Bodenbearbeitungsgerät nach Anspruch 8, dadurch gekennzeichnet, daß die Richtungen der größten Radiusneigung der einzelnen Scheiben (1) mehr als einen einzigen Schraubengang auf der Welle (2) bilden.

**Revendications**

1. Machine agricole pour le travail du sol, pourvue d'un arbre (2) reliable à une commande par moteur, en particulier la prise de force d'un tracteur et s'étendant à travers de la direction de marche, l'arbre étant pourvu de plusieurs disques (1) rigides engrenant le sol en rotation et fixés rigidement et inclinés par rapport à l'axe de l'arbre, chacun desdits disques (1) ovales étant pourvu d'une périphérie lisse et les disques (1) adjacents mutuellement décalés à l'égard de la direction de la plus forte inclinaison de radius, de manière que la périphérie (22) de chaque disque (1) effectue une nutation avec une composante motrice s'étendant en direction de l'axe de l'arbre, caractérisée en ce que chaque disque (1) est situé entre deux douilles de serrage (14, 15) aptes à être mises sur l'arbre (2) de manière résistante à la torsion en des positions angulaires différentes et adhérent uniformement au disque (1), la surface de serrage (17) adhérente au disque (1) de chaque douille de serrage (14, 15) s'étendant obliquement par rapport à l'axe (4) de l'arbre, mais les douilles de serrage (14, 15) adjacentes des disques (1) adjacents portant bien mutuellement lelong d'une surface frontale (19) s'étendant normalement par rapport à l'axe (4) de l'arbre, et que la plus grande valeur de vitesse de la composante motrice s'étendant en direction de l'axe de l'arbre d'un point circonférentiel situé sur le disque (1) pendant son tour autour de l'axe de l'arbre est de 1,2 à 2,5 mètres par seconde, de préférence de 1,2 à 2,2 mètres par seconde, en particulier de 1,5 à 2,0 mètres par seconde.

2. Machine agricole pour le travail du sol selon la revendication 1, caractérisée en ce que l'arbre (2) est pourvu d'une section droite polygonale d'un nombre n de coins, en particulier de section hexagonale, et que les douilles de serrage (14, 15) sont pourvues d'ouvertures centrales (16) y adaptées et également de section droite polygonale.

3. Machine agricole pour le travail du sol selon la revendication 2, caractérisée en ce que la section droite polygonale des ouvertures centrales (16) des douilles de serrage (14, 15) a le nombre n de coins.

4. Machine agricole pour le travail du sol selon la revendication 2 ou 3, caractérisée en ce que chaque disque (1) est pourvu d'une ouverture centrale (23) adaptée avec jeu à la section droite polygonale de l'arbre et de la même forme polygonale.

5. Machine agricole pour le travail du sol selon une des revendications 1 à 4, caractérisée en ce que les disques (1) sont cintrés ou bombés vers un côté comme des assiettes, les faces creuses de tous les disques (1) donnant sur le même côté.

6. Machine agricole pour le travail du sol selon une des revendications 1 à 5, caractérisée en ce que les parties de surface (17, 18) mutuellement adhérentes des disques (1) et des douilles de serrage (14, 15) sont plates et que par contre, les parties circonférentielles des disques (1) sont bombées ou de forme tronconique.

7. Machine agricole pour le travail du sol selon une des revendications 1 à 6, caractérisée en ce que tout le jeu de douilles de serrage (14, 15) et de disques (1) est retenu contre le déplacement en direction longitudinale de l'arbre sur l'arbre (2) par deux bouts (20), de préférence les paliers de l'arbre (2).

8. Machine agricole pour le travail du sol selon une des revendications 1 à 7, caractérisée en ce que chaque disque (1) en soi est d'une inclinaison identique par rapport à l'arbre (2), mais dans une direction différente, la direction de la plus grande inclinaison radiale par rapport à l'axe de l'arbre changeant uniformement et de même sens de disque (1) à disque (1).

9. Machine agricole pour le travail du sol selon la revendication 8, caractérisée en ce que les directions de la plus grande inclinaison radiale des disques (1) individuels forment plus qu'un seul pas de vis sur l'arbre (2).

## Claims

1. Agricultural soil-working machine having a shaft (2) connectable to an engine drive, in particular the power take-off shaft of a traction vehicle and extending transversely to the driving direction, on which shaft a plurality of rigid disks (1) engaging the soil on rotation is rigidly attached inclined to the shaft axis, each one of said oval disks (1) having a smooth circumference and adjacent disks (1) being mutually staggered in respect of the direction of the steepest radius inclination such that the circumference (22) of each disk performs a tumbling motion with a motion component extending in the direction of the shaft axis, characterized in that each disk is supported between two split rings (14, 15) abutting the disk and non-rotatably placed onto the shaft (2) in various angular positions, the clamping surface (17) of each split ring (14, 15) extending obliquely to the shaft axis (4), but mutually adjacent split rings (14, 15) of adjacent disks (2) abutting one another along a front surface (19) extending normally to the shaft axis (4), and that the highest velocity value of the motion component extending in the direction of the shaft axis of a peripheral point located on the disk (1) during its turn around the shaft axis amounts to 1.0 to 1.5 meters per second, in particular 1.5 to 2.0 meters per second.

2. Soil-working machine according to claim 1, wherein the shaft (2) has a polygonal cross section with the number of corners n, in particular a hexagonal cross section, and the split rings (14, 15) have central openings (16) adapted thereto, also of polygonal cross section.

3. Soil-working machine according to claim 2, wherein the polygonal cross section of the central openings (16) of the split rings (14, 15) has the number 2n of corners.

4. Soil-working machine according to claim 2 or 3, wherein each disk (1) has central openings (23) of the same polygonal shape matching the polygonal cross section of the shaft (2) with clearance.

5. Soil-working machine according to any one of the claims 1 to 4, wherein the disks (1) are bent upward or cambered to one side, the hollow sides of all disks (1) facing the same side.

6. Soil-working machine according to any one of the claims 1 to 5, wherein the abutting surface portions (17, 18) of the disks (1) and the split rings (14, 15) are plane, while the peripheral portions (21) of the disks (1) are of cambered or frustoconical shape.

7. Soil-working machine according to any one of the claims 1 to 6, wherein the entire set of split rings (14, 15) and disks (1) is held against displacement in the longitudinal direction of the shaft on the shaft (2) by two end pieces (20), preferably the bearings of the shaft (2).

8. Soil-working machine according to any one of the claims 1 to 7, wherein each disk (1) is of the same inclination, but in a different direction, in relation to the shaft (2), the direction of the greatest radius inclination in relation to the shaft axis changing uniformly and in the same direction from disk (1) to disk (1).

9. Soil-working machine according to claim 8, wherein the directions of the steepest radius inclinations of the individual disks (1) form more than one single thread turn on the shaft (2).

# FIG. 1

# FIG. 2

# FIG. 3

# FIG. 4